(19) Europäisches Patentamt
European Patent Office
Office européen des brevets

(11) **EP 1 897 745 B1**

(12) **EUROPEAN PATENT SPECIFICATION**

(45) Date of publication and mention
of the grant of the patent:
**28.12.2016 Bulletin 2016/52**

(51) Int Cl.:
*B61L 3/00* *(2006.01)*          *B60L 11/12* *(2006.01)*
*B61C 7/04* *(2006.01)*

(21) Application number: **07253093.4**

(22) Date of filing: **07.08.2007**

(54) **Vehicle driving system**

Kraftfahrzeugsteuerungssystem

Système de conduite de véhicule

(84) Designated Contracting States:
**DE FR GB**

(30) Priority: **07.09.2006 JP 2006242906**

(43) Date of publication of application:
**12.03.2008 Bulletin 2008/11**

(73) Proprietors:
• **Hitachi, Ltd.**
**Chiyoda-ku**
**Tokyo 100-8280 (JP)**
• **Hitachi Mito Engineering Co., Ltd.**
**Hitachinaka-shi**
**Ibaraki 312-8506 (JP)**

(72) Inventors:
• **Miyauchi, Tsutomu**
**Tokyo 100-8220 (JP)**
• **Sato, Yutaka**
**Tokyo 100-8220 (JP)**
• **Ishida, Seiji**
**Tokyo 100-8220 (JP)**
• **Toyota, Eiichi**
**Tokyo 100-8220 (JP)**
• **Shimada, Motomi**
**Tokyo 100-8220 (JP)**

(74) Representative: **Gill, Stephen Charles et al**
**Mewburn Ellis LLP**
**City Tower**
**40 Basinghall Street**
**London EC2V 5DE (GB)**

(56) References cited:
**WO-A2-2005/097573      US-A1- 2002 174 797**
**US-A1- 2004 216 636      US-B1- 6 230 496**

**Description**

BACKGROUND OF THE INVENTION

Field of the Invention

The present invention relates to a vehicle driving system comprising a vehicle on which an electrical power storage device and an electrical power generating device such as a diesel-engine generator are mounted.

Description of the Related Art

A railway diagram restricted in operation of railway vehicles is made on an assumption of running based on a run curve determined in advance. This run curve is determined by combination of running patterns of power running, coasting running, constant speed, braking corresponding to driving command and used when the railway vehicle is operated on a route. This run curve is a standard run curve in operation on the route, and no delay will be generated in the railway system when the railway vehicle is operated on the route as long as the run curve is abide by.
Particularly, when there is only one power source (only a diesel engine of a railway motor car or an overhead wire of an electric train, for example), since the run curve is derived from the performance of the running railway vehicle based on the power source, it is possible to surely abide by the railway system when the railway vehicle is operated on the route only if there is no trouble such as a vehicle failure or signal failure occurs. However, in the case of two or more power sources, if one or more of them cannot generate power any more due to a specific circumstance, it is impossible to surely abide by the railway diagram.
As a railway vehicle with two or more power sources as an example, there is a hybrid railway vehicle comprising an electrical power generating device made of combination of a power device such as a fuel cell or a diesel engine and a generator which generates electrical power using the power and an electrical power storage device such as a secondary battery, a capacitor and the like. In the case of this hybrid railway vehicle, since the electrical power storage device such as the secondary battery and the capacitor can discharge up to a determined capacity of electrical power due to its nature, if power running such as express operation continues, the discharge of the electrical power storage device can not be maintained to the end of the power running. When the discharge of the electrical power storage device can not be maintained, the power running performance is lowered, the standard run curve can not be abide by in operation of the railway vehicle on the route, and a trouble might occur in the railway diagram.
As a method for solving this problem, such a method is proposed that a run curve is created by distributing a stored electrical power of the secondary battery to each speed zone in a standard run curve based on a tractive force curve only by the electrical power generating device when the stored electrical power of the secondary battery is not used and the railway vehicle is operated based on the created run curve (See Japanese Unexamined Patent Application Publication No. 2005-198416). The operating method described in said document stores electrical power in the secondary battery so as to attain electrical power required for power running at a power-running start time T and dynamically changes the run curve when the running according to the run curve can not be maintained due to restriction of the electrical power storage amount of the secondary battery.
However, the art described in the above-mentioned document requires a run curve creating device or its equivalent. Also, since a running manner of a railway vehicle is somewhat fluctuated by individuality of a driver and cannot be fixed in one, it might be drastically changed under a circumstance such as a delay. With the art described in the above-mentioned document, when the running in compliance with the run curve cannot be maintained due to restriction of a stored electrical power amount of the secondary battery in such a case, a method to dynamically recreate the run curve is proposed, but in that case, since the running according to the run curve originally fixed is not possible, there is such a nonconformity that running according to the railway diagram cannot be guaranteed.
Then, the present invention has an object to enable running without a trouble in a railway diagram by appropriate charge/discharge control of an electrical power storage device according to a running manner by a driver in a hybrid railway vehicle comprising an electrical power generating device made of combination of a power device such as a fuel cell or a diesel engine and a generator for generating electrical power using the power and an electrical power storage device such as a secondary battery, a capacitor and the like.
WO 2005/097573 proposes emission management for a hybrid locomotive. US 2002/0174797 proposes a hybrid energy locomotive system.

SUMMARY OF THE INVENTION

In order to achieve the above object, the present invention provides a system for driving a vehicle according to claim 1.

The above train control device determines a running state of the train based on the command from the master controller and in the case of coasting, constant-speed operation or stop, it carries out control so that the charge amount of the electrical power storage device of the train is held in the vicinity of the target charge amount according to the position of the train. That is, when the charge amount of the electrical power storage device of the train is higher than the target charge amount according to the position, operation with discharge of the electrical power storage device is preferable, while when the charge amount of the electrical power storage device of the train is lower than the target charge amount according to the position on the contrary, operation without using the electrical power storage device as much as possible or with charge of the electrical power storage device is preferable.

According to the present invention, since the appropriate charge/discharge control of the secondary battery is possible according to the state of running without a run curve creating device, running without a trouble in the railway diagram is enabled, which is an exerted effect.

BRIEF DESCRIPTION OF THE DRAWINGS

FIG. 1 is a schematic block diagram of a railway vehicle control device according to an embodiment of the present invention;
FIG. 2 is a processing flowchart of the train control device;
FIG. 3 is a diagram illustrating a creating method of a position-reference charge amount pattern;
FIG. 4 is a diagram illustrating a creating method of a position-reference charge amount pattern based on a reference run curve;
FIG. 5 is a diagram illustrating a specific control example in running;
FIG. 6 is a processing flowchart of another train control device;
FIG. 7 is a diagram illustrating a specific control example in another running; and
FIG. 8 is a block diagram of another railway vehicle control device.

DETAILED DESCRIPTION OF THE PREFERRED EMBODIMENTS

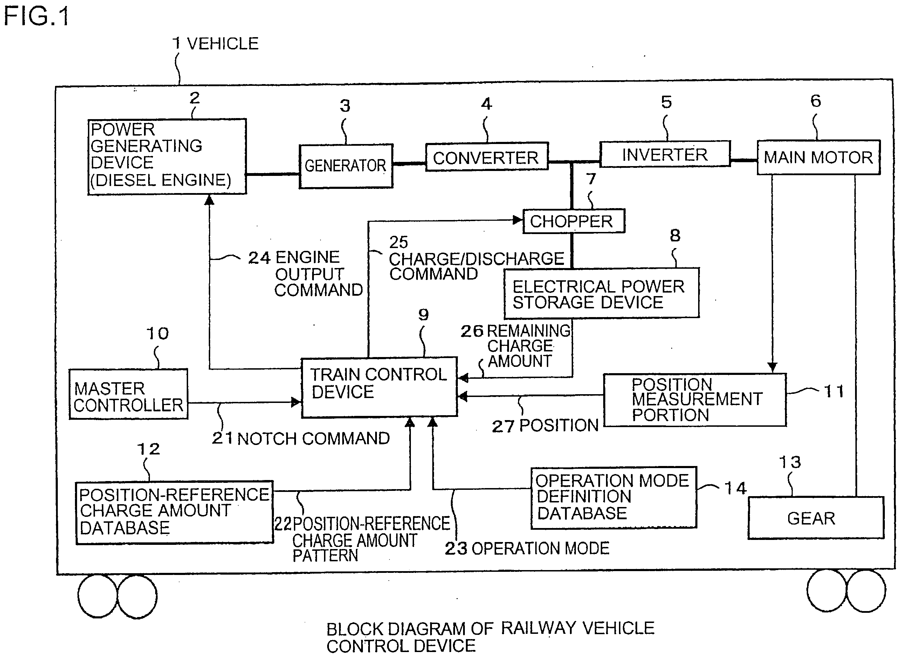

An embodiment of the present invention will be described below referring to FIGS. 1 to 8.

FIG. 1 is a schematic block diagram of a railway vehicle control device of this embodiment.

In FIG. 1, a power system indicated by a thick line will be described first. A vehicle 1, which is a railway car, runs by driving a wheel by a main motor 6 through a gear 13. As the main motor 6, a three-phase alternating-current motor (an induction motor or a synchronous motor) is generally used. In order to supply three-phase alternating electrical power to the main motor 6, which is the three-phase alternating-current motor, an inverter 5 is mounted. To this inverter 5, a direct-current electrical power is supplied from a generator 3 through a converter 4, and a direct-current electrical power is supplied from an electrical power storage device 8 through a chopper 7.

The generator 3 is combined with a power generating device 2 (hereinafter, abbreviated as an engine) such as a diesel engine whose output is controlled based on an engine output command 24 from a train control device 9 so as to constitute an electrical power generating device and outputs a three-phase alternating current electrical power. The three-phase alternating current electrical power outputted from the generator 3 is converted by the converter 4 to a direct-current electrical power and supplied to the inverter 5.

On the other hand, the electrical power storage device 8 comprises a chargeable/dischargeable battery or the like such as a nickel hydrogen cell, a lithium ion cell, or a lead cell. The chopper 7 is a pressure raising/lowering chopper having a bidirectional control function of discharge from the electrical power storage device 8 to the direct current side of the inverter 5 or charge from the direct current side of the inverter 5 to the electrical power storage device 8. Instead of the power generating device 2 such as a diesel engine, it may be configured by combination of a fuel cell and the chopper 7.

Next, the control system indicated by a thin line will be described. The train control device 9 obtains a position 27 of the train from a position measurement portion 11 which measures the position of the train, obtains a position-reference charge amount pattern 22 from a position-reference charge amount database 12, obtains a remaining charge amount 26 from the electrical power storage device 8, and obtains an operation mode 23 from an operation mode definition database 14. Also, the train control device 9 outputs an engine output command 24 to the power generating device 2 at the same time and outputs a charge/discharge command 25 to the chopper 7. The detail will be described later.

Here, the position measurement portion 11 is comprised by a GPS device or a speed generator provided at the gear 13 of a train or a rotating shaft of a wheel or combination of the both.

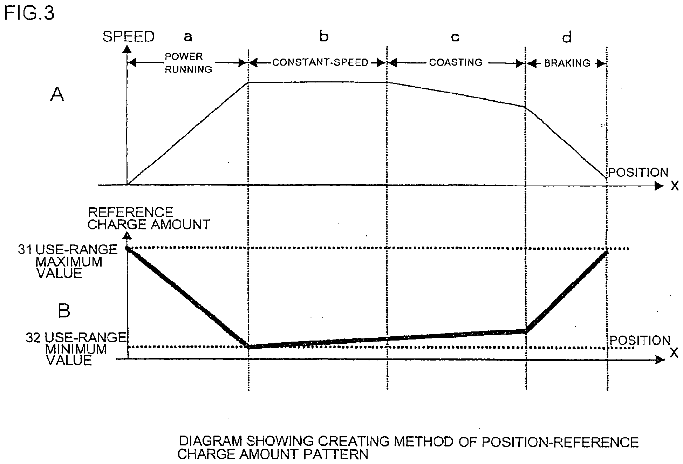

Next, creation of the position-reference charge amount pattern stored in the position-reference charge amount database 12 will be described using FIG. 3.

FIGS. 3 are diagrams illustrating a creating method of the position-reference charge amount pattern, in which FIG. 3A shows a running pattern of position-speed, while FIG. 3B shows the position-reference charge amount pattern. An upper dot line on the position-reference charge amount pattern indicates a maximum value 31 in a use range of the electrical power storage device 8, while a lower dot line indicates a minimum value 32 in the use range of the electrical power storage device 8.

The position-speed running pattern in FIG. 3A indicates a pattern consisting of a power running in a section a, a constant-speed running in a section b, a coasting in a section c and braking and stop in a section d. First, the train control device 9 acquires a charge amount at a position X in the section a for the power running from an equation 1 so as to create a curve of a reference charge amount at the position in the power running in the section a.

[Equation 1]

$$\text{Reference charge amount} = \text{Maximum value of use range} - \int(Tr(X) \cdot V(X) - E) \ldots \text{Equation 1}$$

Here, Tr(X) is a tension (N) of the main motor 6 at the position X, V(X) is a speed (m/s) of the vehicle 1 at the position X, and E is the maximum output of the power generating device 2 (diesel engine).

Next, the train control device 9 acquires the charge amount at a position Y during regeneration in a braking section of the section d from an equation 2 so as to create a reference charge amount curve at a position during regeneration by braking in the section d.

[Equation 2]

$$\text{Reference charge amount} = \text{Maximum value of use range} - \int Br(Y) \cdot V(Y) \ldots \text{Equation 2}$$

Here, Br(Y) is an electric braking force (N) of the main motor 6 at the position Y, and V(Y) is a speed (m/s) of the vehicle 1 at the position Y.

Lastly, the train control device 9 creates a position-reference charge amount pattern in FIG. 3B by connecting the end charge amount of the power running in the section a and the start charge amount of regeneration by braking in the section d with a straight line in the sections b, c of constant-speed and coasting.

Here, in the position-reference charge amount pattern 22 stored in the position-reference charge amount database 12, power running, regeneration, coasting, constant-speed running are determined by the position, and it has a characteristic that the charge amount of the electrical power storage device 8 is lowered during power running since the electrical power storage device 8 discharges electrical power, while the charge amount of the electrical power storage device 8 is raised during regeneration running since the electrical power storage device 8 charges electrical power. The position-reference charge amount pattern 22 is created using this characteristic.

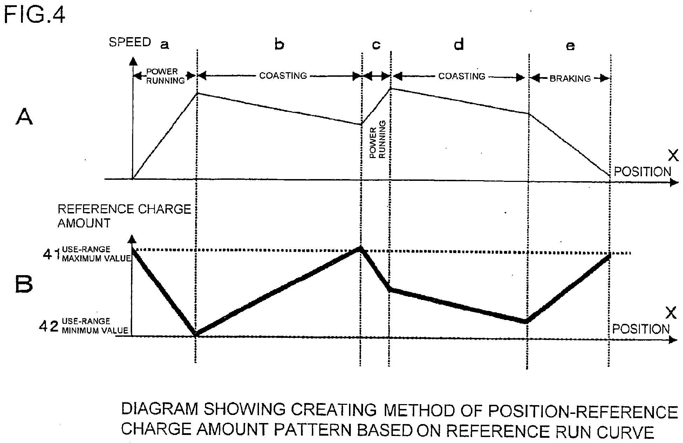

FIGS. 4 are diagrams illustrating a creating method of the position-reference charge amount pattern based on the standard run curve, in which FIG. 4A is a position-speed running pattern, and FIG. 4B is a position-reference charge amount pattern.

Similarly to the above-mentioned FIG. 3, the position-reference charge amount pattern in FIG. 4B corresponding to the position-speed running pattern in FIG. 4A can be created.

That is, first, the train control device 9 calculates the position-reference charge amount for the power running in the section a, the power running in the section c, and regeneration by braking in the section e. Next, the position-reference charge amount of the coasting portion in the section b between the power running in the section a and the power running in the section c is created by connecting the end charge amount of the power running in the section a and the start charge amount of the power running in the section c by a straight line. Also, the position-reference charge amount of the coasting portion in the section d between the power running in the section c and the regeneration by braking in the section e is created by connecting the end charge amount of the power running in the section c and the start charge amount of regeneration by braking in the section e by a straight line.

In this way, the position of the train and the portion of the constant speed b of the charge amount pattern of the electrical power storage device are created by connecting the end charge amount of the power running a and the start charge amount of the power running c by a straight line, and the portion of the coasting d can be easily created by connecting the end charge amount of the power running c and the start charge amount of the braking e by a straight line. The pattern 22 of running position of the train and the reference charge amount is stored in the position-reference charge amount database 12, but this pattern 22 is preferably prepared in plural according to time for running between stations.

Next, the operation mode definition database 14 will be described. The operation mode definition database 14 is a database defining the operation mode 23 when a train in which a plurality of vehicles 1 are coupled is running at a given position and comprised by the following three modes.

The first mode is a mode for ensuring acceleration performance of the train by assisting electrical power supply from the electrical power storage device 8 to the main motor 6 as much as possible (hereinafter referred to as "assist-priority mode") when the power running is expected for the running of the train from the running pattern of position-speed shown in FIG. 4A.

The second mode is a mode for controlling energy generated by the main motor 6 in regeneration is charged to the electrical power storage device 8 as much as possible (hereinafter referred to as "regeneration-priority mode") when regeneration of electrical power from the main motor 6 to the electrical power storage device 8 is expected from the running pattern of position-speed of the train shown at the running of the train in FIG. 4A.

The third mode is a mode not applicable to either of the first or the second (hereinafter referred to as "normal mode").

Each of the operation mode 23 will be described below.

In the first assist-priority mode, it is expected that depending on the stored capacity of the electrical power storage device 8, the charge amount of the electrical power storage device 8 might drop below a use-range minimum value 42 in the middle of the power running. Therefore, in order that the electrical power supply assist from the electrical power storage device 8 to the main motor 6 does not stop, the train control device 9 sets a value higher than a target charge amount according to the position by 5% as a target charge amount. And by supplying the charge/discharge command 25 to the chopper 7, the charge amount to the electrical power storage device 8 is controlled.

In the second regeneration-priority mode, in order to control so that the energy generated by the main motor 6 in regeneration is charged in the electrical power storage device 8 as much as possible, the train control device 9 sets a value lower than a target charge amount according to the position by 5% as a target charge amount. And by supplying the charge/discharge command 25 to the chopper 7, the charge amount to the electrical power storage device 8 is controlled.

Also, in the third normal mode, in order to be able to respond to both of them, the train control device 9 supplies the charge/discharge command 25 to the chopper 7 so that the charge amount of the charge electrical power device 8 according to the position of the train is maintained.

In this way, the train control device 9 determines the operation mode 23 and sets the target charge amount according to the operation mode 23. For example, in the power running in the position-speed running pattern shown in FIG. 4A, it is necessary to secure train acceleration performance by assisting the electrical power supply from the electrical power storage device 8 to the main motor 6 as much as possible. Therefore, the train control device 9 sets the operation mode 23 to the assist-priority mode.

In this assist-priority mode, as mentioned above, it is worried that the electrical power supply from the electrical power storage derive 8 to the main motor 6 can not be assisted any more. In order to overcome this problem, charging of the electrical power storage device 8 should be promoted during the coasting and constant-speed operations and the charge amount of the electrical power storage device 8 of the train should be preferably kept higher. Thus, the train control device 9 sets the target charge amount approximately 5% higher than the target charge amount according to the position.

Also, in view of the position-speed running pattern of the train shown in FIG. 4A, if it is known that the pattern changes to braking without fail after a predetermined time has elapsed and braking is effected, the train control device 9 sets the operation mode 23 to the regeneration-priority mode. And it makes control so that the energy generated by the main motor 6 in regeneration is charged in the electrical power storage device 8 as much as possible. Therefore, the train control device 9 sets the target charge amount approximately 5 % lower than the target charge amount according to the position of the train.

Moreover, based on the position 27 (see FIG. 1) obtained from the position measurement portion 11, the train control device 9 sets the regeneration-priority mode before a braking start expected point (before FIG. 4A(e)) and the assist-priority mode before transition to a higher limited speed from a lower limited speed (before FIG. 4A(c)). At the point other than them, each mode is combined for setting to obtain the normal running mode.

As a method for the train control device 9 to select the operation modes 23 may be as follows.

The first method is a method of determining the operation mode 23 according to the position of the running train by the train control device 9 in advance.

The second method is a method of determining the operation mode 23 by storing the position of the vehicle 1 running at a limited speed and the stop position of the vehicle 1 in advance and by comparing them with the position 27 calculated from the position measurement portion 11.

In the case of the second method, when a change to the higher limited speed (direction where the limited speed gets higher) occurs within $\alpha$ km from the current train running position, train control device 9 sets the operation mode 23 to the assist-priority mode, while if the stop position is located within $\alpha$ km from the current position, the operation mode 23 is set to the regeneration-priority mode. If either of them is not applicable, the operation mode 23 is set to the normal operation mode.

The value of $\alpha$ is preferably approximately 1/10 of the distance between stations. If the distance between stations is 10 km, for example, the value of $\alpha$ is 1 km.

In the normal running, the current charge amount of the electrical power storage device 8 of the train by the train control device 9 is compared with the target charge amount according to the running position of the train, but it is required that hysteresis is provided in the current charge amount at that time. Here, the hysteresis means that setting is made with a margin to a proportion of the charge capacity to the maximum capacity of the electrical power storage device 8 mounted on the vehicle 1. For example, the charge capacity is set at a proportion of $\pm 1\%$, $\pm 10\%$ or +1% to -10% of the maximum capacity.

However, if the width of the hysteresis is made small, the engine output command 24 to the power generating device (diesel engine) 2 by the train control device 9 and the control by the charge/discharge command 25 to the electrical power storage device 8 to the chopper 7 are switched frequently, which might affect riding comfort depending on the follow-up of the device output.

On the contrary, if the width of the hysteresis is large, the above-mentioned control is not switched frequently, but when transition is made to braking after coasting, a phenomenon that the electrical power storage device 8 is hard to be charged at coasting occurs, and it is worried that the electrical power amount which can be regenerated at the electrical power storage device 8 might be decreased. From these facts, it is preferable that the hysteresis is a charge amount of approximately $\pm 5\%$ to the target charge amount according to the running position of the train.

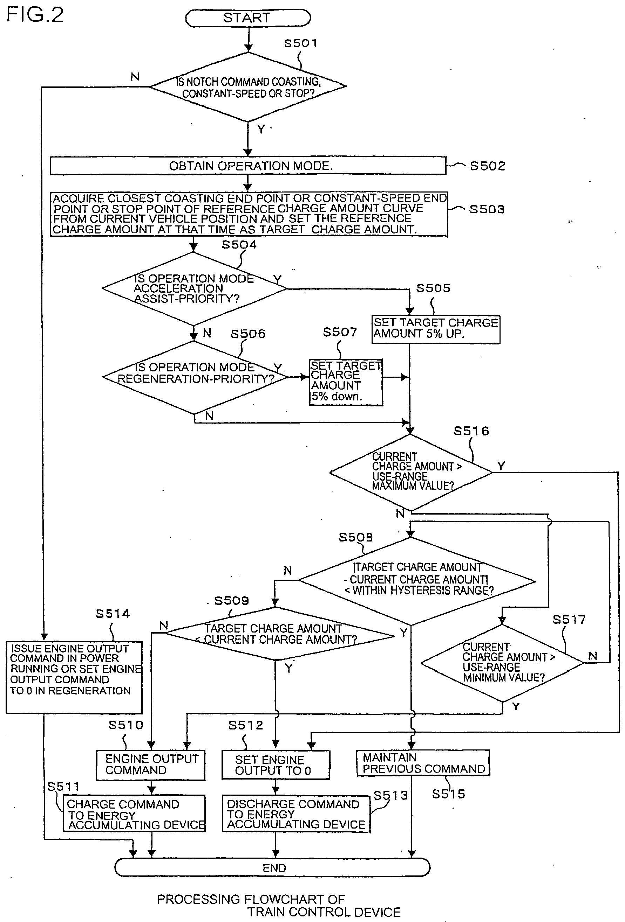

Next, a calculation method of the engine output command 24 to the power generating device (diesel engine) 2 and the charge/discharge command 25 to the electrical power storage device 8 to the chopper 7 by the train control device 9 will be described using FIGS. 2, 4, 5.

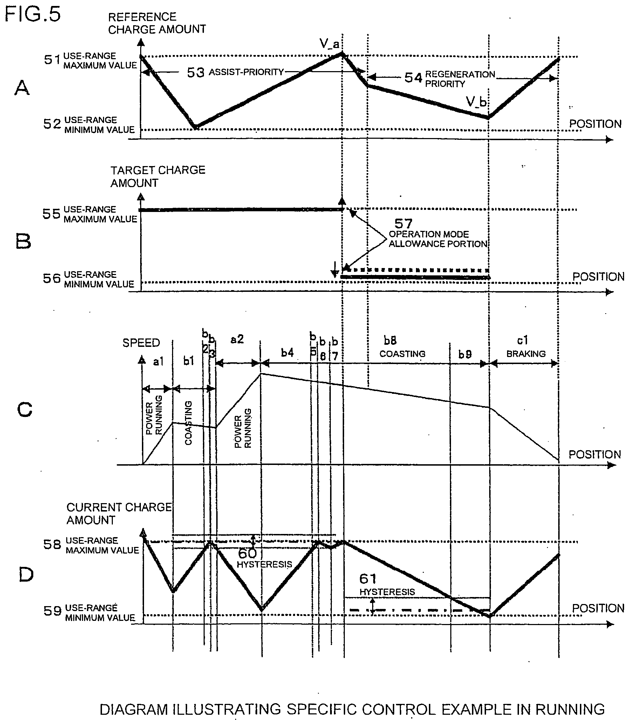

FIG. 2 shows a processing flowchart of the train control device 9. FIG. 5 shows a case where the position-reference charge amount pattern in FIG. 4B is stored in the position-reference charge amount database 12 and illustrates a control example when the processing flow in FIG. 2 is used for running.

FIG. 5A is the position -reference charge amount pattern, FIG. 5B is the position -target charge amount pattern, FIG. 5C is the position-speed running pattern, and FIG. 5D is the position-current charge amount. The train control device 9 determines the operation mode 23 in advance using the above-mentioned method. The operation mode 23 is described in the position-reference charge amount pattern shown in FIG. 5A.

The running of the section a1 in FIG. 5C is power running. At this time, in FIG. 2, the train control device 9 determines if a notch command (driving command) 21 is coasting, constant-speed running or stop (Step S501). At this determination step S501, if it is determined that the notch command 21 is neither coasting, constant-speed running nor stop, the train control device 9 outputs an engine output command for the power running or sets the engine output command to 0 for the regeneration (Step S514). The section a1 is during power running but not in regeneration, and the train control device 9 generates the engine output command 24 to the power generating device (diesel engine) 2.

Next, in the section b1 in FIG. 5C, the running changes to coasting. Thus, at the determination Step S501 in FIG. 2, the train control device 9 determines that the notch command 21 is coasting and obtains the operation mode 23 (Step S502). Here, the operation mode 23 is the assist-priority mode 53 as shown in FIG. 5A.

Moreover, the train control device 9 acquires the coasting end point, constant-speed end point, or stop point of the closest reference charge amount curve from the current vehicle position and sets the reference charge amount at that time as the target charge amount (Step S503). Here, the reference charge amount V_a (= use-range maximum value 51) at the closest coasting end point in the position-reference charge amount pattern shown in FIG. 5A is set as the target charge amount.

Next, the train control device 9 determines if the operation mode 23 obtained at Step S502 is the assist-priority mode 53 or not (Step S504). If it is determined that the operation mode 23 is the assist-priority mode 53 at the determination Step S504, the train control device 9 re-sets the target charge mount (Step S505) to 5% above the target charge amount (operation mode allowance portion 57) acquired at step S503. At this time, since the target charge amount shown in FIG. 5B does not exceed the use-range maximum value 55, it is set to the use-range maximum value 55.

Next, the train control device 9 determines if the current charge amount shown in FIG. 5D is larger than the use-range maximum value 58 or not (Step S516). When it is determined that the current charge amount is not larger than the use-range maximum value 58 at the determination Step S516, the train control device 9 determines if the current charge amount shown in FIG. 5D is smaller than the use-range minimum value 59 or not (Step S517). It is known at the determination Step S517 that the current charge amount is not smaller than the use-range minimum value 59.

Next, at the determination Step S517, if it is determined that the current charge amount is not smaller than the use-range minimum value 59, the train control device 9 determines if an absolute value of a difference between the target charge amount and the current charge amount is smaller than the range of the hysteresis 60 shown in FIG. 5D (within a range of the hysteresis 60) or not (Step S508).

At the determination Step S508, if it is determined that the absolute value of the difference between the target charge amount and the current charge amount is not smaller than the hysteresis range (outside the range of the hysteresis 60), the train control device 9 compares the target charge amount shown in FIG. 5B with the current charge amount shown in FIG. 5D so as to determine if the target charge amount is smaller than the current charge amount or not (Step S509). At the determination Step S509, if it is determined that the target charge amount is higher than the current charge amount, the program goes to Step S510. If it is determined at the determination Step S517 that the current charge amount is smaller than the use-range minimum value 59, the program also goes on to Step S510.

At Step S510, the train control device 9 generates the engine output command 24 to the power generating device (diesel engine) 2, and the program goes on to Step S511. At Step S511, the train control device 9 generates the charge/discharge command 25 (charge command here) to the electrical power storage device 8 to the chopper 7, which is the energy storage device. By this, the electrical power storage device 8 is gradually charged, and the current charge amount shown in FIG. 5D is increased. When the current charge amount shown in FIG. 5D falls in the range of the hysteresis 60, the transition is made to the section b2 in FIG. 5C.

In the section b2 in FIG. 5C, similarly to the section b1, the program proceeds with Step S501, Step S502, Step S503, Step S504, Step S505, Step S516, Step S517, and Step S508. At Step S508, since it is determined that the absolute value of the difference between the target charge amount and the current charge amount is within the range of the hysteresis 60, the program goes on to Step S515.

At Step S515, the train control device 9 maintains the previous command. Therefore, the train control device 9 generates the engine output command 24 to the power generating device (diesel engine) 2 similarly to Step S510 and also generates the charge/discharge command 25 (charge command here) to the electrical power storage device 8 to the shopper 7, which is the energy storage device, similarly to Step S511. By this, the electrical power storage device 8 is further charged, and the current charge amount shown in FIG. 5D is increased and when the use-range maximum value 58 is exceeded, the state changes to the section b3.

In the section b3 in FIG. 5C, similarly to the section b1, the program proceeds with Step S501, Step S502, Step S503, Step S504, Step S505, Step S516, Step S517, Step S508 and Step S509. At Step S509, the target charge amount and the current charge amount are compared, and since it is determined that the target charge amount is lower than the current charge amount, the program goes on to Step S512.

Even if it is determined at the determination Step S516 that the current charge amount is larger than the use-range maximum value 58, the program goes on to Step S512. At Step S512, the train control device 9 sets the engine output command 24 generated to the power generating device (diesel engine) 2 to 0, and the program goes on to Step S513. At Step S513, the train control device 9 generates the charge/discharge command 25 (discharge command here) to the electrical power storage device 8 to the chopper 7. By this, the electrical power storage device 8 is gradually discharged.

After that, the notch command 21 is supplied to the train control device 9 again and the state is changed to the electrical power running.

In the section a2 in FIG. 5C, the same processing as in the section a1 is performed. By this, the current charge amount shown in FIG. 5D is decreased.

Next, when the notch command 21 is turned off in the section b4 in FIG. 5C, similarly to the section b1, the program proceeds with Step S501, Step S502, Step S503, Step S504, Step S505, Step S516, Step S517, Step S508, Step S509, Step S510, and Step S511, the electrical power storage device 8 is gradually charged, and the current charge amount is increased as shown in FIG. 5D. When the current charge amount shown in FIG. 5D falls in the range of the hysteresis 60, the transition is made to the section b5.

In the section b5 in FIG. 5C, similarly to the section b2, the program proceeds with Step S501, Step S502, Step S503, Step S504, Step S505, Step S516, Step S517, Step S508, and Step S515. By this, the electrical power storage device 8 is further charged, and the current charge amount shown in FIG. 5D is increased, and when it exceeds the use-range maximum value 58, the state is changed to the section b6.

In the section b6 in FIG. 5C, similarly to the section b3, the program proceeds with Step S501, Step S502, Step S503, Step S504, Step S505, Step S516, Step S517, Step S508, Step S509, Step S512, and Step S513. Since the electrical power storage device 8 is gradually discharged, the current charge amount shown in FIG. 5D is decreased and falls below the range of the hysteresis 60, and the state is changed to the section b7.

In the coasting b7 in FIG. 5C, similarly to the section b2 and b5, the program proceeds with Step S501, Step S502, Step S503, Step S504, Step S505, Step S516, Step S517, Step S508, and Step S515. By this, the electrical power storage device 8 is further charged, and the current charge amount shown in FIG. 5D is increased.

Next, since the operation mode 23 obtained at Step S502 during this period is changed, the state moves to the section b8. The operation mode 23 here is changed from the assist-priority mode 53 to the regeneration priority mode 54 as shown in FIG. 5A.

In the section b8 in FIG. 5C, at Step S501 in FIG. 2, the train control device 9 determines the operation as coasting and the program goes on to Step S502. Then, at Step S502, the train control device 9 obtains the operation mode 23 and the program goes on to Step S503. The operation mode 23 here is the regeneration-priority mode 54.

At Step S503, since the train control device 9 acquires the coasting end point, constant-speed end point, or stop point of the closest reference charge amount pattern from the current vehicle position and sets the reference charge amount at that time as the target charge amount, the reference charge amount V_b (> use-range minimum value 52) at the closest coasting end point in the position-reference charge amount pattern shown in FIG. 5A is set as the target charge amount.

Next, the program goes on to Step S504. At Step S504, the train control device 9 determines if the operation mode 23 obtained at step S502 is the assist-priority mode 53 or not. Here, since the operation mode 23 is determined as the regeneration-priority mode 54, the program goes on to Step S506. Then, the train control device 9 determines if the operation mode 23 obtained at Step S502 is the regeneration-priority mode or not (Step S506). If it is determined at the determination Step S506 that the operation mode 23 is the regeneration-priority mode 54, the train control device 9 re-sets the target charge amount at 5% below the target charge amount (operation mode allowance amount 57) acquired at Step S503 (Step S507).

Then, at Step S516, it is determined that the current charge amount is smaller than the use-range maximum value, and at Step S517, it is determined that the current charge amount is larger than the use-range minimum value, and the program goes on to Step S508. At Step S508, it is determined that the absolute value of the difference between the target charge amount and the current charge amount is outside the range of the hysteresis 60, and the program goes on to Step S509. At Step S509, the target charge amount shown in FIG. 5B is compared with the current charge amount shown in FIG. 5D, and it is determined that the target charge amount is lower than the current charge amount. Thus, the program goes on to Step S512. At Step S512, the train control device 9 sets the engine output command 24 to the power generating device (diesel engine) 2 to 0, and the program goes on to Step S513.

Further at Step S513, the train control device 9 generates the charge/discharge command 25 (discharge command here) to the electrical power storage device 8 to the chopper 7. By this, since the electrical power storage device 8 is gradually discharged, the current charge amount shown in FIG. 5D is decreased, and when it falls within the range of the hysteresis 61, the state is changed to the section b9.

In the section b9 shown in FIG. 5C, similarly to the section b8, the program proceeds with Step S501, Step S502, Step S503, Step S504, Step S505, Step S516, Step S517, and Step S508. At Step S508, the absolute value of the difference between the target charge amount shown in FIG. 5B and the current charge amount shown in FIG. 5D is determined as within the range of the hysteresis 61, and the program goes on to Step S515. At Step S515, the previous command is maintained.

Therefore, similarly to Step S512, the train control device 9 sets the engine output command 24 to the power generating device (diesel engine)2 to 0, and similarly to Step S513, the train control device 9 generates the charge/discharge command 25 (discharge command here) to the electrical power storage device 8 to the chopper 7. By this, the electrical power storage device 8 is further discharged and the current charge amount shown in FIG. 5D is decreased. After that, when the notch command 21 indicating braking is supplied to the train control device 9, the state is changed to the braking.

The section c1 shown in FIG. 5C is braking. In this case, at Step S501 in FIG. 2, since it is determined that the operation is not coasting, constant-speed or stop, the program goes to Step S514. At Step S514, the engine output command 24 is outputted for power running, while the engine output command 24 is set to 0 for regeneration. Thus, the train control device 9 for regeneration sets the engine output command 24 to 0 to the power generating device (diesel engine) 2 for power running.

By the above processing, the charge/discharge command 25 to the electrical power storage device 8 can be controlled on the basis of the position-target charge amount determined at the first Step S503. By this, output control by the engine output command 24 to the power generating device (diesel engine) 2, which is the electrical power generating device, according to running by the driver and the charge/discharge control by the charge/discharge command 25 to the electrical power storage device 8 can be executed appropriately, by which operation not impairing the railway diagram is enabled.

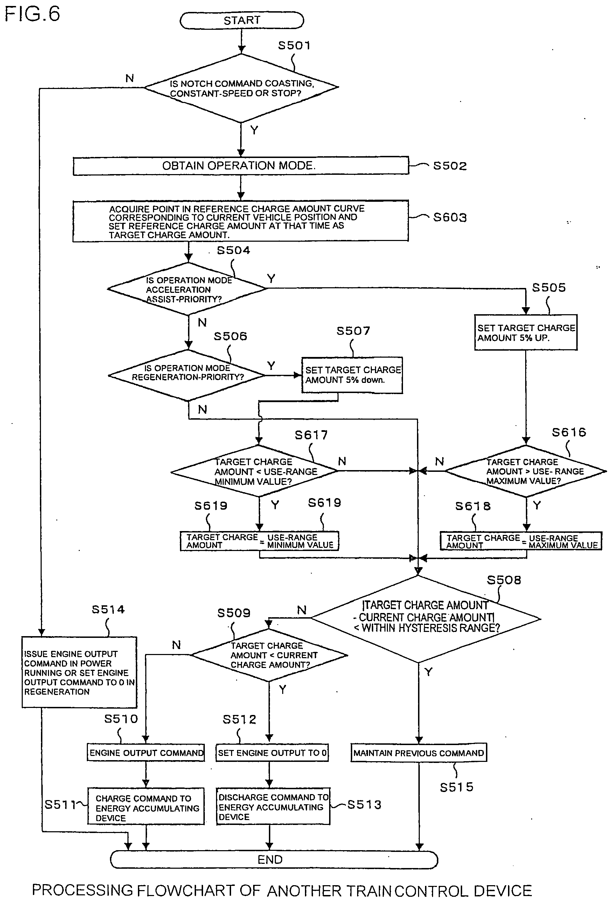

Also, even if the processing for setting the target charge amount to the reference charge amount V_a, V_b at the coasting end point at Step S503 in FIG. 2 is changed to the processing for setting the reference charge amount shown at Step S603 in FIG. 6 to the target charge amount, the charge/discharge command 25 to the electrical power storage device 8 can be similarly controlled. The example will be described using FIGS. 4, 6, 7.

FIG. 6 shows a processing flowchart of another train control device 9. In FIG. 6, the same processing as in FIG. 2 is given the same reference numeral.

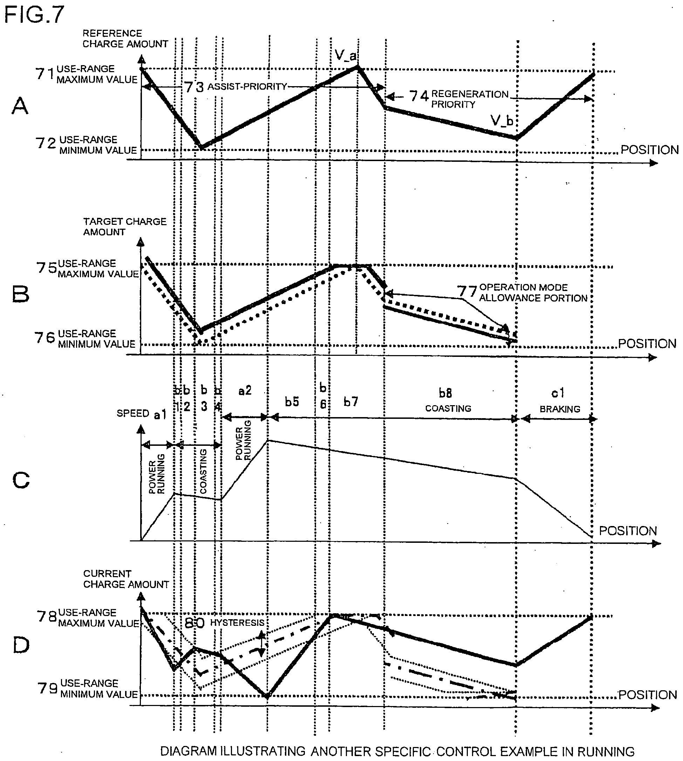

FIGS. 7 show a control example when the processing flow in FIG. 6 is used for running in the case where the position-reference charge amount pattern in FIG. 4B is stored in the position-reference charge amount database 12.

FIG. 7A shows a position-reference charge amount pattern, FIG. 7B for a position-target charge amount pattern, FIG. 7C for a position-speed running pattern, and FIG. 7D for a position-current charge amount.

In FIG. 7C, the section a1 is the power running. At this time, in FIG. 6, the train control device 9 determines if the notch command 21 is coasting, constant-speed running or stop (Step S501). At the determination Step S501, since it is determined that the notch command 21 is not costing, constant-speed running or stop, the train control device 9 generates the engine output command for the power running or sets the engine output command to 0 for regeneration. Since it is power running here, the train control device 9 generates the engine output command 24 to the power generating device (diesel engine) 2 (Step S514).

Next, after transition to the section b1 in Fig. 7C, the running changes to coasting. Thus, in FIG. 2, the train control device 9 determines that the notch command 21 is coasting, and the program goes on to Step S502, where the operation mode 23 is obtained (Step S502). The operation mode 23 is an assist-priority mode 73 here as shown in FIG. 7A.

Moreover, the train control device 9 acquires a point in the reference charge amount curve corresponding to the current vehicle position and sets the reference charge amount at that time as the target charge amount (Step S603). Here, the curve itself of the reference charge amount in the position-reference charge amount pattern shown in FIG. 7A is set as the target charge amount shown in FIG. 7B.

Next, the train control device 9 determines if the operation mode 23 obtained at Step S502 is the assist-priority mode 73 or not (Step S504). If it is determined that the operation mode 23 is the assist-priority mode 73 at the determination Step S504, the train control device 9 re-sets the target charge amount at 5% above the target charge amount acquired at Step S503 (operation mode allowance portion 77)(Step S505).

Next, the train control device 9 determines if the target charge amount shown in FIG. 7B is larger than the use-range maximum value 75 (Step S616). If it is determined that the target charge amount is not larger than a use-range maximum value 75 at the determination step S616, the program immediately goes on to Step S508. If it is determined that the target charge amount is larger than the use-range maximum value 75 at the determination step S616, the target charge amount is set to the use-range maximum value 75 (Step S618). At this time, since the target charge amount shown in FIG. 7B does not exceed the use-range maximum value 75, a portion exceeding the use-range maximum value 75 is set as the use-range maximum value 75.

Next, the train control device 9 determines if the absolute value of the difference between the target charge amount and the current charge amount is smaller than the range of a hysteresis 80 shown in FIG. 7D (within the range of the hysteresis 80) or not (Step S508). If it is determined that the absolute value of the difference between the target charge amount and the current charge amount is not smaller than the hysteresis range (outside the range of the hysteresis 80) at the determination Step S508, the train control device 9 compares the target charge amount shown in FIG. 7B with the current charge amount shown in FIG. 7D and determines if the target charge amount is smaller than the current charge amount or not (Step S509). Since the target charge amount is higher than the current charge amount at the determination Step S509, the program goes on to Step S510.

At Step S510, the train control device 9 generates the engine output command 24 to the power generating device (diesel engine) 2, and the program goes on to Step S511. Moreover, at Step S511, the train control device 9 generates the charge/discharge command 25 (charge command here) to the electrical power storage device 8 to the chopper 7. By this, the electrical power storage device 8 is gradually charged, and the current charge amount shown in FIG. 7D is increased. When the current charge amount shown in FIG. 7D falls within the range of the hysteresis 80, transition is made to the section b2 in FIG. 7C.

In the section b2 in FIG. 7C, similarly to the section b1, the program proceeds with Step S501, Step S502, Step S603, Step S504, Step S505, Step S616, Step S618, and Step S508. At Step S508, since the absolute value of the difference between the target charge amount shown in FIG. 7B and the current charge amount shown in FIG. 7D is determined as within the range of the hysteresis 80, the program goes on to Step S515.

At Step S515, the train control device 9 maintains the previous command. Therefore, the train control device 9 generates the engine output command 24 to the power generating device (diesel engine) 2 similarly to Step S510, and generates the charge/discharge command 25 (charge command here) to the electrical power storage device 8 to the chopper 7 as in Step S511. By this, the electrical power storage device 8 is further charged, the current charge amount shown in FIG. 7D is increased, and when the range of the hysteresis 80 is exceeded, the state is changed to the section b3.

In the section b3 in FIG. 7C, similarly to the section b1, the program proceeds with Step S501, Step S502, Step S603, Step S504, Step S505, Step S616, Step S618, Step S508, and Step S509. In the case of this section b3, the target charge amount shown in FIG. 7B is compared with the current charge amount shown in FIG. 7D at Step S509, and since it is determined that the target charge amount is lower than the current charge amount, the program goes on to Step S512.

At Step S512, the train control device 9 sets the engine output command 24 to the power generating device (diesel engine) 2 to 0, and the program goes on to Step S513. Further at Step S513, the train control device 9 generates the charge/discharge command 25 (discharge command here) to the electrical power storage device 8 to the chopper 7, which is the energy accumulating device. By this, the electrical power storage device 8 is gradually discharged, and when the current charge amount shown in FIG. 7D falls within the range of the hysteresis 80, the transition is made to the section b4.

In the section b4 in FIG. 7C, similarly to the section b2, the program proceeds with Step S501, Step S502, Step S603, Step S504, Step S505, Step S616, Step S618, Step S508, and Step S515. At Step S515, the train control device 9 maintains the previous command.

Therefore, the train control device 9 sets the engine output command 24 to the power generating device (diesel engine) 2 to 0 as in Step S510 and generates the charge/discharge command 25(discharge command here) to the electrical power storage device 8 to the chopper 7, which is the energy accumulating device as in Step S513. By this, the electrical power storage device 8 is gradually discharged.

After that, the notch command 21 is supplied to the train control device 9 again and the state is changed to the power running.

In the section a2 in FIG. 7C, the same processing as in the section a1 is executed. By this, the current charge amount shown in FIG. 7D is decreased.

Next, when the notch command 21 is turned off in the section b5 in FIG. 7C, similarly to the section b1, the program proceeds with Step S501, Step S502, Step S603, Step S504, Step S505, Step S616, Step S618, Step S508, Step S509, Step S510, and Step 511. The electrical power storage device 8 is gradually charged, and the current charge amount shown in FIG. 7D is increased. When the current charge amount shown in FIG. 7D falls within the range of the hysteresis 80, the transition is made to the section b6.

In the section b6 in FIG. 7C, similarly to the section b2, the program proceeds with Step S501, Step S502, Step S603, Step S504, Step S505, Step S508, and Step 515. By this, the electrical power storage device 8 is further charged, the current charge amount shown in FIG. 7D is increased, and when a use-range maximum value 78 is exceeded, the state is changed to the section b7.

In the section b7 in FIG. 7C, similarly to the section b3, the program proceeds with Step S501, Step S502, Step S603, Step S504, Step S505, Step S616, Step S618, Step S508, Step S509, Step S512, and Step 513. Since the electrical power storage device 8 is gradually discharged, the current charge amount shown in FIG. 7D is decreased.

Next, the operation mode 23 obtained at Step S502 during this period is changed from the assist-priority mode 73 to the regeneration-priority mode 74, and the state is changed to the section b8.

In the section b8 in FIG. 7C, at Step S501 in FIG. 2, the train control device 9 determines operation as coasting, and the program goes on to Step S502. Next, at Step S502, the train control device 9 obtains the operation mode 23, and the program goes on to Step S603. The operation mode 23 here is the regeneration-priority mode 74. At Step S603, a point in the reference charge amount curve corresponding to the current vehicle position is acquired and the reference charge amount at that time is set as the target charge amount. Thus, the reference charge amount itself is set as the target charge amount.

Next, the program goes on to Step S504. At Step S504, the train control device 9 determines if the operation mode 23 obtained at Step S502 is the assist-priority mode or not. In this case, since it is determined that the operation mode 23 is not the assist-priority mode at the determination Step S504, the program goes on to Step S506. Subsequently, the train control device 9 determines if the operation mode 23 obtained at Step S502 is the regeneration-priority mode 74 or not (Step S506). At the determination Step S506, it is determined that the operation mode 23 is the regeneration-priority mode 74, and the program goes on to Step S507.

At Step S507, the train control device 9 re-sets the target charge amount at 5% below the target charge amount acquired at Step S603 (operation mode allowance portion 77). Then, the train control device 9 determines if the current charge amount shown in FIG. 7D is smaller than the use-range minimum value 79 (Step S617). At the determination Step S617, it is known that the current charge amount is not smaller than the use-range minimum value 79. If the current charge amount is smaller than the use-range minimum value 79 at the determination Step S617, the target charge amount is set as the use-range minimum value 79 (Step 5619).

Next, the program goes on to Step S508. At Step S508, since the absolute value of the difference between the target charge amount and the current charge amount is outside the hysteresis 80, the program goes on to Step S509. At Step S509, the target charge amount shown in FIG. 7B is compared with the current charge amount shown in FIG. 7D, and since the target charge amount is lower than the current charge amount, the program goes on to Step S512.

At Step S512, the train control device 9 sets the engine output command 24 to the power generating device (diesel engine) 2 to 0, and the program goes on to Step S513. Moreover, at Step S513, the train control device 9 generates the charge/discharge command 25 (discharge command here) to the electrical power storage device 8 to the chopper 7. By this, the electrical power storage device 8 is gradually discharged, and the current charge amount shown in FIG. 7D is decreased.

After that, when the notch command 21 indicating braking is supplied to the train control device 9, the state is changed to braking.

The section c1 in FIG. 7C is braking. In this case, at Step S501 in FIG. 2, it is determined that the operation is not coasting, constant-speed or stop, and the program goes to Step S514. At Step S514, the engine output command 24 is outputted for the power running, while the engine output command 24 is set to 0 for the regeneration. Since it is during regeneration in this case, the train control device 9 sets the engine output command 24 to the power generating device (diesel engine) 2 to 0.

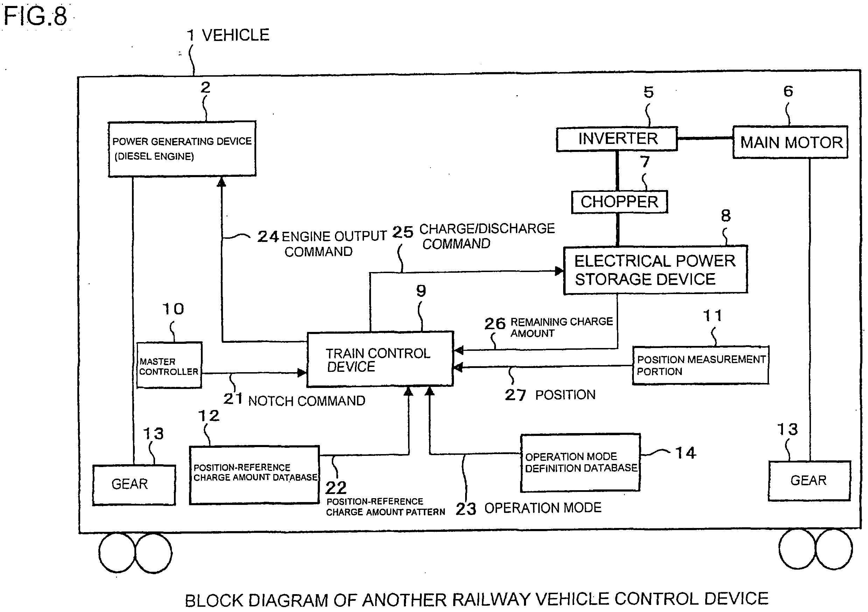

FIG. 8 is a block diagram illustrating another railway vehicle control device.

As the railway vehicle control device shown in FIG. 8, the charge/discharge command 25 to the electrical power storage device 8 can be controlled as above even with the parallel hybrid configuration. That is, the vehicle 1, which is a railway vehicle, runs by driving wheels by the electrical power generating device 2 such as a diesel engine (hereinafter referred to as an engine) or the motor 6 or both of them through the gear 13. As the motor 6, a three-phase alternating-current motor (induction motor or synchronous motor) is used in general.

In order to supply three-phase alternating-current electrical power to this three-phase alternating-current motor 6, the inverter 5 is mounted. To this inverter 5, a direct-current electrical power is supplied from the electrical power storage device 8 through the chopper 7. The electrical power storage device 8 comprises a chargeable/dischargeable battery or the like such as a nickel hydrogen cell, a lithium ion cell, or a lead cell. The chopper 7 is a pressure raising/lowering chopper having a bidirectional control function of discharge from the electrical power storage device 8 to the direct current side of the inverter 5 or charge from the direct current side of the inverter 5 to the electrical power storage device 8.

Also, the control system indicated by a thin line will be described. The train control device 9 obtains the position 27 of the train from the position measurement portion 11 which measures the position of the train, obtains the position-reference charge amount pattern 22 from the position-reference charge amount database 12, obtains the remaining charge amount 26 from the electrical power storage device 8, and obtains the operation mode 23 from the operation mode definition database 14. Also, the train control device 9 outputs the engine output command 24 to the power generating device 2 and outputs the charge/discharge command 25 to the chopper 7. By this, the control equivalent to the configuration of the series hybrid type in FIG. 1 can be realized.

Moreover, since the running time between stations is not the same for all the vehicles 1 in general, by providing the position-reference charge amount pattern 22 per inter-station running time, the operation close to the reference charge amount pattern can be executed using the position-reference charge amount pattern 22 according to the running time.

**Claims**

1. A system for driving a vehicle based on a reference charge amount pattern, comprising:

   an electrical power generating device (2, 3):

      a first electrical power converter (4) for converting electrical power of said electrical power generating device:

         an electrical power storage device (8) for storing electrical power converted by said first electrical power converter;

         a second electrical power converter (5) for mutually converting an output electrical power of said first electrical power converter and/or electrical power of said electrical power storage device and electrical power of a motor (6) driving the vehicle;

      a train control device (9) for controlling said electrical power generating device and said first and said second electrical power converters;
      a master controller (10) for outputting a driving command (24) to said train control device; and
      a position measurement portion (11) for measuring the position of the train;

   wherein:

      a reference charge amount pattern (22) of said electrical power storage device generated according to a running pattern of position-speed which indicates an expected power running and regeneration, and said position of the train, and in that
      said train control device (9) determines a target charge amount of the electrical power storage device (8) from the reference charge amount pattern (22) of said electrical power storage device according to the position of the train measured by said position measurement portion (11) according to operation modes defined in advance based on a running pattern of the vehicle corresponding to said driving command; and
      generates an output command (24) to said electrical power generating device (2, 3) and a charge/discharge command to said electrical power storage device (8) so that the target charge amount of said electrical power storage device is achieved,

when the power running is expected for the running of the train from the running pattern, a value larger than the reference charge amount pattern is set as the target charge amount of the electrical power storage device; and when the regeneration is expected for the running of the train from the running pattern, a value smaller than the reference charge amount pattern is set as the target charge amount of the electrical power storage device.

2. The vehicle driving system according to claim 1, wherein
the reference charge amount pattern of said electrical power storage device is generated on the basis of a maximum value in a use range of said electrical power storage device, a tension (Tr) of the motor (6) during power running and an electric braking force (Br) of the motor (6) during regeneration, and a vehicle speed generated from the running pattern.

3. The vehicle driving system according to claim 1 or 2, wherein
in determination of said target charge amount, a position closest to the current vehicle position is acquired among a coasting end point, constant-speed end point or stop point of the reference charge amount pattern of said electrical power storage device according to said train position, and the reference charge amount of that position is set as the target charge amount when said vehicle running pattern is the coasting operation or the constant-speed operation.

4. The vehicle driving system according to claim 1 or 2, wherein
in determination of said target charge amount, a position closest to the current vehicle position is acquired in the reference charge amount pattern of said electrical power storage device according to said train position, and the reference charge amount of that position is set as the target charge amount when said vehicle running pattern is the coasting running operation or the constant-speed operation.

5. The vehicle driving system according to claim 1 or 2, wherein
said operation mode has three modes: a regeneration-priority mode having a target charge amount lowered by a given amount from the acquired target charge amount, an assist-priority mode having a target charge amount raised by a given amount from the acquired target charge amount, and a normal operation mode for operation using the acquired target charge amount.

6. The vehicle driving system according to claim 5, wherein
based on the position of the train obtained from said position measurement portion, said regeneration-priority mode is set as said operation mode before an expected braking start point, said assist-priority mode is set as said operation mode before transition from a lower limited speed to a higher limited speed, and said normal operation mode is set as said operation mode when none of the above conditions is met.

7. The vehicle driving system according to any one of claims 1 to 6, wherein
said electrical power generating device is a power generating device such as a diesel engine (2) and an electrical generating device (3) or a fuel cell generating electrical power.

8. The vehicle driving system according to any one of claims 1 to 7, wherein
said position measurement portion (11) is a GPS device, a speed generator of a train, or combination of the both.

**Patentansprüche**

1. System zum Führen eines Fahrzeugs abhängig von einem Referenz-Ladungsmengen-Muster, umfassend:

eine elektrische Leistungserzeugungsvorrichtung (2, 3):

einen ersten elektrischen Leistungswandler (4) zum Wandeln von elektrischer Leistung der elektrischen Leistungserzeugungsvorrichtung:

eine elektrische Leistungsspeichervorrichtung (8) zum Speichern von elektrischer Leistung, die von dem ersten elektrischen Leistungswandler gewandelt wurde;
einen zweiten elektrischen Leistungswandler (5) zum wechselseitigen Umwandeln einer ausgegebenen elektrischen Leistung des ersten elektrischen Leistungwandlers und/oder elektrischer Leistung der elektrischen Leistungspeichervorrichtung und elektrischer Leistung eines Motors (6), der das Fahrzeug antreibt;

eine Zugsteuervorrichtung (9) zum Steuern der elektrischen Leistungserzeugungsvorrichtung und der ersten und zweiten elektrischen Leistungswandler;
eine Hauptsteuerung (10) zum Ausgeben eines Fahrbefehls (24) an die Zugsteuervorrichtung; und
ein Positionsmessungsbereich (11) zum Messen der Position des Zugs;

wobei:

ein Referenzladungsmengenmuster (22) der elektrischen Leistungsspeichervorrichtung abhängig von einem Fahrtmuster aus Position und Geschwindigkeit, welches eine erwartete Fahrleistung und Regeneration und die Position des Zugs angibt, erzeugt wird, und wobei
die Zugsteuervorrichtung (9) eine Soll-Ladungsmenge der elektrischen Leistungsspeichervorrichtung (8) aus dem Referenzladungsmengenmuster (22) der elektrischen Leistungsspeichervorrichtung abhängig von der von dem Positionsmessungsbereich (11) gemessenen Position des Zugs gemäß im Voraus abhängig von einem Fahrtmuster des Fahrzeugs entsprechend dem Fahrbefehl definierten Betriebszuständen ermittelt; und
einen Ausgabebefehl (24) für die elektrische Leistungssteuervorrichtung (2, 3) und ein Ladungs-/Entladungsbefehl an die elektrische Leistungsspeichervorrichtung (8) erzeugt, sodass die Soll-Ladungsmenge der elektrischen Leistungsspeichervorrichtung erreicht wird,
wenn gemäß dem Fahrtmuster für die Fahrt des Zugs eine Leistungsfahrt erwartet wird, ein Wert als die Soll-Ladungsmenge der elektrischen Leistungsspeichervorrichtung festgelegt wird, der größer als das Referenzladungsmengenmuster ist; und
wenn aufgrund der Fahrt des Zugs und dem Fahrtmuster eine Regeneration erwartet wird, ein Wert als Soll-Ladungsmenge der elektrischen Leistungsspeichervorrichtung eingestellt wird, der kleiner als das Referenzladungsmengenmuster ist.

2. System zum Führen des Fahrzeugs nach Anspruch 1, wobei
das Referenzladungsmengenmuster der elektrischen Leistungsspeichervorrichtung abhängig von einem Maximalwert in einem Benutzungsbereich der elektrischen Leistungsspeichervorrichtung, einer Spannung (Tr) des Motors (6) während der Leistungsfahrt und einer elektrischen Bremskraft (Br) des Motors (6) während der Regeneration sowie einer aus dem Fahrtmuster erzeugten Fahrzeuggeschwindigkeit erzeugt wird.

3. Fahrzeugsystem zum Betreiben eines Fahrzeugs nach Anspruch 1 oder 2, wobei
beim Bestimmen der Soll-Ladungsmenge ein der derzeitigen Fahrzeugposition am nächsten liegender Punkt ermittelt wird aus einem Ausroll-Endpunkt, einem Konstantgeschwindigkeits-Endpunkt oder einem Stopp-Punkt des Referenzladungsmengenmusters der elektrischen Leistungsspeichervorrichtung gemäß der Zugposition und wobei die Referenzladungsmenge dieser Position als die Soll-Ladungsmenge eingestellt wird, wenn das Fahrzeug-Fahrtmuster einem Ausrollbetrieb oder einem Konstantgeschwindigkeitsbetrieb entspricht.

4. System zum Betreiben eines Fahrzeugs nach Anspruch 1 oder 2, wobei
beim Bestimmen der Soll-Ladungsmenge eine der derzeitigen Position am nächsten liegende Position in dem Referenzladungsmuster der elektrischen Leistungsspeichervorrichtung gemäß der Zugposition ermittelt wird und die Referenzladungsmenge dieser Position als die Soll-Ladungsmenge eingestellt wird, wenn das Fahrzeug-Fahrtmuster einem Ausrollbetrieb oder einem Konstantgeschwindigkeitsbetrieb entspricht.

5. System zum Betreiben eines Fahrzeugs nach Anspruch 1 oder 2,
wobei der Betriebszustand drei Modi umfasst: einen Regenerations-Prioritätsmodus, welcher einen um einen gegebenen Betrag gegenüber der ermittelten Soll-Ladungsmenge reduzierten Soll-Ladungsmenge hat, einen Unterstützungs-Prioritätsmodus, der einen um einen gegebenen Betrag gegenüber der erfassten Soll-Ladungsmenge erhöhte Soll-Ladungsmenge hat und einen Normalbetriebsmodus zum Betrieb unter Verwendung der erfassten Soll-Ladungsmenge.

6. System zum Betreiben eines Fahrzeugs nach Anspruch 5, wobei
abhängig von der von dem Positionsmessbereich ermittelten Position des Zugs der Regenerationsprioritätsmodus als Betriebsmodus vor einem erwarteten Brems-Startpunkt eingestellt wird, der Unterstützungs-Prioritätsmodus als Betriebsmodus vor dem Übergang von einem Übergang zwischen einer geringeren Grenzgeschwindigkeit und einer höheren Grenzgeschwindigkeit eingestellt wird, und der Normalbetriebsmodus als Betriebsmodus eingestellt wird, wenn keine der obengenannten Bedingungen zutrifft.

7. System zum Betreiben eines Fahrzeugs nach einem der Ansprüche 1 bis 6, wobei

die elektrische Leistungserzeugungsvorrichtung eine Leistungserzeugungsvorrichtung wie ein Dieselmotor (2) und eine elektrische Generatorvorrichtung (3) oder eine Brennstoffzelle sind, die elektrische Leistung erzeugen.

**8.** System zum Betreiben eines Fahrzeugs nach einem der Ansprüche 1 bis 7, wobei der Positionsmessungsbereich (11) eine GPS-Vorrichtung, ein Geschwindigkeitsgenerator eines Zugs oder eine Kombination aus beidem ist.

**Revendications**

**1.** Système destiné à entraîner un véhicule sur la base d'un modèle de quantité de charge de référence, comportant :

un dispositif générateur de puissance électrique (2, 3),
un premier convertisseur de puissance électrique (4) pour convertir la puissance électrique dudit dispositif générateur de puissance électrique,
un dispositif de stockage de puissance électrique (8) pour stocker la puissance électrique convertie par ledit premier convertisseur de puissance électrique,
un second convertisseur de puissance électrique (5) pour convertir mutuellement la puissance électrique de sortie dudit premier convertisseur de puissance électrique et/ou la puissance électrique dudit dispositif de stockage de puissance électrique et la puissance électrique d'un moteur (6) entraînant le véhicule,
un dispositif de commande de train (9) pour commander ledit dispositif générateur de puissance électrique et lesdits premier et second convertisseurs de puissance électrique,
une commande maître (10) pour transmettre une commande d'entraînement (24) audit dispositif de commande de train, et
une partie de mesure de position (11) pour mesurer la position du train,

dans lequel :

un modèle de quantité de charge de référence (22) dudit dispositif de stockage de puissance électrique est généré en fonction d'un modèle de position-vitesse de roulement qui indique un roulement utilisant la puissance électrique et une régénération attendues, et de ladite position du train, et en ce que
ledit dispositif de commande de train (9) détermine une quantité de charge cible du dispositif de stockage de puissance électrique (8) à partir du modèle de quantité de charge de référence (22) dudit dispositif de stockage de puissance électrique en fonction de la position du train mesurée par ladite partie de mesure de position (11) en fonction de modes de fonctionnement définis à l'avance sur la base d'un modèle de roulement du véhicule correspondant à ladite commande d'entraînement, et
génère une commande de sortie (24) dudit dispositif générateur de puissance électrique (2, 3) et une commande de charge/décharge dudit dispositif de stockage de puissance électrique (8) de sorte que la quantité de charge cible dudit dispositif de stockage de puissance électrique est atteinte,
lorsque le roulement utilisant la puissance électrique est attendu pour le roulement du train à partir du modèle de roulement, une valeur plus grande que le modèle de quantité de charge de référence est fixée en tant que quantité de charge cible du dispositif de stockage de puissance électrique, et
lorsque la régénération est attendue pour le roulement du train à partir du modèle de roulement, une valeur plus petite que le modèle de quantité de charge de référence est fixée en tant que quantité de charge cible du dispositif de stockage de puissance électrique.

**2.** Système d'entraînement de véhicule selon la revendication 1, dans lequel
le modèle de quantité de charge de référence dudit dispositif de stockage de puissance électrique est généré sur la base d'une valeur maximale dans une plage d'utilisation dudit dispositif de stockage de puissance électrique, d'une tension (Tr) du moteur (6) pendant un roulement utilisant la puissance électrique et d'une force de freinage électrique (Br) du moteur (6) pendant une régénération, et d'une vitesse de véhicule générée à partir du modèle de roulement.

**3.** Système d'entraînement de véhicule selon la revendication 1 ou 2, dans lequel
pendant la détermination de ladite quantité de charge cible, une position la plus proche de la position actuelle du véhicule est acquise parmi un point de fin de marche en roue libre, un point de fin de vitesse constante ou un point d'arrêt du modèle de quantité de charge de référence dudit dispositif de stockage de puissance électrique en fonction de ladite position du train, et la quantité de charge de référence de cette position est fixée en tant que quantité de charge cible lorsque ledit modèle de roulement de véhicule est le fonctionnement en roue libre ou le fonctionnement à vitesse constante.

4. Système d'entraînement de véhicule selon la revendication 1 ou 2, dans lequel
pendant la détermination de ladite quantité de charge cible, une position la plus proche de la position actuelle du véhicule est acquise dans le modèle de quantité de charge de référence dudit dispositif de stockage de puissance électrique en fonction de ladite position du train, et la quantité de charge de référence de cette position est fixée en tant que quantité de charge cible lorsque ledit modèle de roulement de véhicule est le fonctionnement en roue libre ou le fonctionnement à vitesse constante.

5. Système d'entraînement de véhicule selon la revendication 1 ou 2, dans lequel
ledit mode de fonctionnement a trois modes: un mode de priorité à la régénération ayant une quantité de charge cible réduite d'une quantité donnée par rapport à la quantité de charge cible acquise, un mode de priorité à l'assistance ayant une quantité de charge cible augmentée d'une quantité donnée par rapport à la quantité de charge cible acquise, et un mode de fonctionnement normal pour un fonctionnement en utilisant la quantité de charge cible acquise.

6. Système d'entraînement de véhicule selon la revendication 5, dans lequel
sur la base de la position du train obtenue à partir de ladite partie de mesure de position, ledit mode de priorité à la régénération est fixé en tant que dit mode de fonctionnement avant un point de début de freinage attendu, ledit mode de priorité à l'assistance est fixé en tant que dit mode de fonctionnement avant la transition d'une vitesse limitée réduite à une vitesse limitée augmentée, et ledit mode de fonctionnement normal est fixé en tant que dit mode de fonctionnement lorsqu'aucune des conditions ci-dessus n'est satisfaite.

7. Système d'entraînement de véhicule selon l'une quelconque des revendications 1 à 6, dans lequel
ledit dispositif générateur de puissance électrique est un dispositif générateur de puissance tel qu'un moteur diesel (2) et un dispositif générateur électrique (3) ou une pile à combustible générant de la puissance électrique.

8. Système d'entraînement de véhicule selon l'une quelconque de revendications 1 à 7, dans lequel
ladite partie de mesure de position (11) est un dispositif GPS, un générateur de vitesse d'un train ou une combinaison des deux.

# FIG.1

BLOCK DIAGRAM OF RAILWAY VEHICLE CONTROL DEVICE

EP 1 897 745 B1

FIG.2

PROCESSING FLOWCHART OF
TRAIN CONTROL DEVICE

FIG.3

DIAGRAM SHOWING CREATING METHOD OF POSITION-REFERENCE
CHARGE AMOUNT PATTERN

# FIG.4

DIAGRAM SHOWING CREATING METHOD OF POSITION-REFERENCE
CHARGE AMOUNT PATTERN BASED ON REFERENCE RUN CURVE

FIG.5

DIAGRAM ILLUSTRATING SPECIFIC CONTROL EXAMPLE IN RUNNING

FIG.6

PROCESSING FLOWCHART OF ANOTHER TRAIN CONTROL DEVICE

EP 1 897 745 B1

# FIG.7

DIAGRAM ILLUSTRATING ANOTHER SPECIFIC CONTROL EXAMPLE IN RUNNING

22

# FIG.8

1 VEHICLE

BLOCK DIAGRAM OF ANOTHER RAILWAY VEHICLE CONTROL DEVICE

EP 1 897 745 B1

**EP 1 897 745 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005198416 A
- WO 2005097573 A
- US 20020174797 A